# EUROPEAN PATENT SPECIFICATION

(11) **EP 0 932 733 B1**
(45) Date of publication and mention of the grant of the patent: **03.04.2002**
(21) Application number: 97945836.1
(22) Date of filing: 09.10.1997
(51) Int. Cl.: E04B 5/02

(54) **SELF-SUPPORTING CONSTRUCTION ELEMENT OF EXPANDED PLASTICS, IN PARTICULAR FOR MANUFACTURING FLOOR ELEMENTS AND WALLS OF BUILDINGS IN GENERAL**
SELBSTTRAGENDES BAUELEMENT AUS EXPANDIERTEM PLASTIK, INSBESONDERE FÜR DIE HERSTELLUNG VON BODENPLATTEN UND GEBÄUDEWÄNDEN IM ALLGEMEINEN
ELEMENT DE CONSTRUCTION AUTOPORTEUR EN PLASTIQUE EXPANSE, DESTINE EN PARTICULIER A LA PRODUCTION D'ELEMENTS DE PLANCHER ET DE MURS DE BATIMENTS EN GENERAL

(30) Priority: 15.10.1996 IT MI962137
(43) Date of publication of application: 04.08.1999
(73) Proprietor: PLASTEDIL S.A., 6830 Chiasso (CH)
(72) Inventor: CRETTI, Piero, CH-6835 Ticino (CH)
(74) Representative: Bottero, Claudio
(86) International application number: PCT/EP97/05671
(87) International publication number: WO 98/16703

(56) References cited:
- EP-A- 0 459 924
- WO-A-95/09953
- FR-A- 2 570 739
- GB-A- 1 130 727
- US-A- 4 128 975

## Description

### Technical Field

This invention relates, in a general aspect thereof, to a self-supporting construction element of expanded plastics material, in particular for manufacturing floor elements and walls of buildings in general.

More particularly, the present invention relates to a self-supporting construction element comprising:
a) a central body, substantially parallelepipedic in shape, provided with opposite faces;
b) at least one reinforcing section bar transversally extending across said central body between said faces and embedded in said expanded plastics.

Throughout the description and the appended claims, the terms: self-supporting construction element of expanded plastics, will be used to indicate a section member made of an expanded plastics material, such as expanded polystyrene, which possesses mechanical properties adapted to withstand without structural yielding all the strains applied thereon during its transportation and installation.

### Background Art

As is known, the use of construction elements made of expanded plastics, preferably expanded polystyrene, in the forms of boards or section members of suitable shape and size serving thermal and sound insulation functions, has long been accepted by the building industry.

It is also known that, in order to confer adequate self-supporting properties to such construction elements, one or more reinforcing section bars of a suitable shape must be incorporated into the mass of expanded plastics.

Thus, for example, European Patent EP 0 459 924 discloses a self-supporting construction element made of expanded plastics material, specifically a floor element, which comprises a substantially parallelepipedic central body in which a reinforcing section bar, made of a thin metal sheet shaped as an I-beam, is integrated during the molding step.

While construction elements of this kind have on the one hand a light weight, a comparative ease of installation and a low cost, on the other hand their application in the art and flexibility of use have been restrained heretofore by their poor fire-resisting properties.

This inadequate resistance to fire is essentially related to the fact that construction elements made of expanded plastics show an insufficient capability to securely hold outer covering layers, such as the plaster layers used for the outer surface finish.

When exposed to fire, in fact, the expanded plastics soon shrinks into a shapeless mass of reduced volume, with the ensuing separation of the outer covering layers and rapid collapse of the whole structure.

In addition, an undesirable separation of the outer covering layers may be caused in some instances by a premature "aging" of the plastics surface to which these coverings adhere, a separation which may be further fostered by exposure to heat sources, dusts, fumes, vapors, or chemical substances coming from a source close to the construction elements.

### Disclosure of Invention

The technical problem underlying the present invention is, therefore, that of providing a self-supporting construction element made of expanded plastics, which allows to overcome the drawbacks mentioned hereinabove with respect to the cited prior art.

According to the invention, this problem is solved by a construction element of the type indicated above, which is characterized in that it further comprises a lath for supporting at least one layer of a suitable covering material, said lath being associated to a fin of said reinforcing section bar lying flush with and substantially parallel to at least one of the faces of said construction element.

In the following description and the subsequent claims, the terms: lath for supporting at least one covering layer, encompass not only conventional mesh -- either smooth or provided with protruding ribs -- obtained by stretching a suitably notched metal sheet, but also any sheet-like member adapted to support a suitable covering material.

Advantageously, the construction element of the invention may achieve at one time both adequate self-supporting features, as conferred thereon by the reinforcing section bar integrated within the mass of expanded plastics, and adequate fire-resisting properties thanks to the presence of the lath, which is securely held by the same reinforcing section bar.

This lath, in fact, is capable of supporting a covering layer constituted by a suitable construction material even in case of shrinking of the mass of plastics.

In a particularly advantageous embodiment, the lath comprises one or more portions extending flush on opposite lateral sides of the construction element, which may be embedded in and anchored also to the concrete used for incorporating and/or joining together one or more adjacent construction elements.

In addition, a lath thus held securely in place by the reinforcing section bar and/or by the concrete is able to effectively prevent any detachment of the covering layer, even in the presence of the aforementioned aging phenomena of the outer surface of the expanded plastics.

In order to improve to the maximum possible extent the fire-resisting properties of the construction element, the material of the covering layer associated to the lath is preferably selected from plaster, cement, or any other fire-retarding or fire-resistant material, such as composites of cement and reinforcing fibers of an appropriate nature.

Preferably, the reinforcing section bar is constituted by a material having suitable structural properties, such as cold rolled, preferably zinc-galvanized steel, shaped so as to be provided at one end with at least one fin perpendicularly extending from the central portion thereof.

For obvious reasons of manufacturing convenience and in order to lower production costs, the reinforcing section bar is preferably worked to a C, Z or H cross-sectional shape.

In a preferred embodiment of the invention, the reinforcing section bar is longitudinally extending within the central body of the construction element along substantially the entire length thereof and is provided with a pair of fins perpendicularly extending from opposite sides of a central portion.

In this case, the fin which extends flush with the construction element serves the function of providing an adequate supporting surface onto which the lath may be secured, while the opposite fin advantageously carries out the function of improving the compression strength of the reinforcing section bar, thereby enhancing the self-supporting properties of the construction element.

Preferably, this second fin comprises a first rectilinear portion, substantially perpendicular to the central portion of the reinforcing section bar, and an end portion bent toward the central portion and forming with the first portion of the fin an angle (α) ranging from 40° to 60° and, still more preferably, equal to about 45°.

Tests carried out by the Applicant have shown that this shape of the fin contributes to further stiffen the reinforcing section bar, and further improves the self-supporting and compression strength properties of the construction element.

Portions of predetermined length of this reinforcing section bar may be obtained by means of conventional bending and cutting operations, known per se, starting from a metal sheet having a height of from 150 to 250 mm and a thickness of from 0.4 to 1.2 mm and, still more preferably, of from 0.5 to 0.8 mm.

Preferably, the central portion of the reinforcing section bar will have, after bending, a height of from 100 to 200 mm, while the fin or opposite fins of the section bar will have a width of from 15 to 30 mm.

Where the reinforcing section bar has two opposite fins, the fin which will become fully embedded within the expanded plastics material will have an overall width comprised between 18 and 22 mm.

Preferably, the first substantially rectilinear portion of said fin, lying perpendicularly to the central portion of the reinforcing section bar, preferably has a width of from 12 to 18 mm, while the remaining end portion thereof is bent towards the reinforcing section bar to form an angle of about 45°.

Preferably, furthermore, the reinforcing section bar is advantageously provided with a plurality of openings formed in its central portion outside of or included between said fins.

These openings serve the dual advantageous function of lightening the reinforcing section bar thus improving the self-supporting properties of the construction element, and of enabling a better integration of the reinforcing section bar into the mass of expanded plastics.

Thanks to the presence of said openings, in fact, the mass of expanded plastics is able to tightly encapsulate the reinforcing section bar during the molding process, thereby integrating and holding securely in place the reinforcing section bar inside the central body of the construction element.

This intimate integration of the reinforcing section bar within the mass of expanded plastics, moreover, prevents any deformation or transversal flexion of the reinforcing section bar even if the latter is essentially constituted, as mentioned above, by a fairly thin metal sheet.

Preferably, said openings have a total area comprised between 10% and 60% of the overall surface area of the reinforcing section bar, meaning with this latter term the overall lateral surface area of the section bar inclusive of the fin(s) (i.e. the overall lateral surface area before forming the fins and cutting the openings).

Still more preferably, the openings cut through the central portion of the reinforcing section bar account for 30% to 40% of the overall surface area thereof.

According to the invention, the shape of the openings -- conventionally obtained in a manner known per se, such as by punching -- is not critical; however, a circular cross-section is preferred for evident reasons of manufacturing convenience.

In the latter instance, the openings have a diameter preferably ranging from 15 to 150 mm.

In a preferred embodiment, the openings are positioned in the central portion of the reinforcing section bar along three parallel rows: a first central row of circular openings, having a prevailing diameter, arranged pitchwise along the median plane x-x of the reinforcing section bar, and two side rows of circular openings, having a smaller diameter, arranged pitchwise on opposite parts of the central row.

Preferably, the circular openings in the side rows have parallel axes and are interposed between two consecutive openings of the central row, as explained hereinafter.

Advantageously, it is possible in this way to more evenly distribute the so-called void areas throughout the central portion of the reinforcing section bar, in order to lighten its structure without detracting from its mechanical strength, and to uniformly spread the contact surface between the reinforcing section bar and the expanded plastics.

Preferably, the pitch between the openings of the central row is equal to the pitch of the side rows and ranges between 80 and 100 mm and, still more preferably, is equal to about 90 mm.

Preferably, furthermore, the openings of the central row have a diameter of from 50 to 80 mm and, still more preferably, of about 60 mm, while the openings of the side rows have a diameter of from 20 to 40 mm and, still more preferably, equal to about 30 mm.

In order to further increase this contact surface and, along therewith, improve the adhesion of the reinforcing section bar to the expanded plastics, the openings cut through the reinforcing section bar may advantageously be provided with a protruding lip along their peripheral edge, or, in the alternative, with one or more protrusions, distributed along their peripheral edge and angularly offset from one another, adapted to provide additional means for anchoring the reinforcing section bar to the mass of expanded plastics.

These protrusions may either be extending from one side of the reinforcing section bar or from both sides thereof.

Preferably, the lath for supporting at least one covering layer is a stretched metallic lath essentially consisting of a rhomb-shaped mesh having a length-to-height rhomb ratio of 2:1.

Preferably, the rhomb length varies between 20 and 60 mm, while the rhomb width varies between 10 and 30 mm.

Preferably, furthermore, the stretched metallic lath has a thickness of from 0.4 to 1.5 mm and, still more preferably, of from 0.4 to 1.0 mm.

In a second embodiment of the invention, the reinforcing section bar transversally extends across the central body of the construction element through the whole thickness thereof, and has a pair of opposite fins lying flush with and substantially parallel to the opposite faces of the construction element.

In this case, the construction element may include a pair of laths, each adapted to support a respective covering layer, associated to a respective one of said opposite fins of the reinforcing section bar.

In this way, it is possible to provide modular wall elements, e.g. for erecting bearing and partition walls for buildings, by pouring concrete into one or more cavities formed in the construction element of the invention and plastering the opposite outer faces thereof.

In a third embodiment of the invention, the construction element may include -- instead of the second lath for supporting the covering layer -- a rigid covering element associated to the reinforcing section bar on the face opposite to that having the first lath.

Preferably, this covering element is a panel of gypsum paperboard, wood, rigid plastics, or any other suitable material having decorating and/or structural functions.

Depending upon the choice of the covering element, provided or not with structural characteristics, the construction elements of the invention may also achieve advantageous load-bearing characteristics, i.e. be capable of autonomously withstanding possible static loads applied thereon.

According to the invention, the construction elements described above can be manufactured by means of a method comprising the steps of:
- associating a lath for supporting at least one layer of a suitable covering material to a fin extending from one end of a reinforcing section bar;
- positioning the thus associated reinforcing section bar and lath into a molding seat of a suitable apparatus for molding plastics;
- feeding expandable plastics granules into the molding seat;
- expanding and then bonding together the plastics granules in said molding seat so as to embed said reinforcing section bar into a mass of expanded plastics having a predetermined shape and to maintain said lath at least in part substantially flush with the mass of expanded plastics.

This method may be carried out by means of molding apparatuses conventional per se and known in the art.

According to the invention, all of the lath or, alternatively, a major portion thereof, will extend substantially flush with the mass of expanded plastics of the construction element leaving the molding apparatus.

Preferably, the lath for supporting the covering layer is associated to the outer surface of the lateral fin of the reinforcing section bar which lies flush on the construction element, by means of electric welding operations and equipment known per se.

Preferably, furthermore, the above method comprises an additional step of partly or fully enucleating said lath from the mass of expanded plastics so as to provide a more effective anchoring to the lath of the covering material and/or of the concrete being cast onto or alongside the construction element.

Preferably, the lath is partly or fully enucleated from the mass of plastics of the construction element by means of an appropriate surface thermal treatment.

In a preferred embodiment, this thermal treatment is carried out by means of a device feeding a sheet of warm air heated to a temperature of from 220° to 260°C.

Advantageously, the extent of shrinking of the expanded plastics, and therefore the extent of lath exposure, can be adjusted by varying the temperature and/or the warm air flow rate and/or the rate of movement of the hot air feeding device.

In addition, this surface thermal treatment of the construction element may be preceded by a step of scraping the construction element surface, directed to removing the outermost layer, the so-called "skin", of the expanded plastics and enabling a more effective surface thermal treatment.

In a further embodiment, the lath(s) may be attached to the side fin(s) of the reinforcing section bar after having molded the construction element and integrated therein the reinforcing section bar.

In this case, the aforementioned steps of scraping and surface thermal treatment may be carried out before fixing the lath, so that the corresponding lateral fin of the reinforcing section bar can be exposed on the surface, if required.

Thus, according to this further embodiment, the construction element of the invention may be obtained by means of a method comprising the steps of:
- positioning a reinforcing section bar, provided with at least one fin at one end, into a molding seat of a suitable apparatus for molding plastics;
- feeding expandable plastics granules into the molding seat;
- expanding and then bonding together the plastics granules in said molding seat so as to embed said reinforcing section bar into a mass of expanded plastics having a predetermined shape and to maintain said at least one fin substantially flush with the mass of expanded plastics;
- associating a lath for supporting at least one layer of a suitable covering material to said at least one fin of said reinforcing section bar.

The construction element thus obtained may be delivered to the construction site as such, or may be further processed downstream of the molding apparatus by associating to the lath(s) for supporting a coating layer of plaster, cement as it is or, optionally, reinforced with fibers of a suitable material.

Where the reinforcing section bar extends across the central body of the construction element throughout its thickness, the construction element may be finished by associating thereto a panel of gypsum paperboard, wood, rigid plastics, or another suitable material for decorating and/or structural purposes.

Further features and advantages of the invention will become more clearly apparent from the following description of some preferred embodiments of a construction element according to the invention, given by way of non-limitative examples with reference to the accompanying drawings.

### Brief Description of Drawings

In the drawings:
- Figure 1 shows a perspective view, in partial cross-section, of a first embodiment of a construction element according to the invention;
- Figure 2 shows an enlarged-scale perspective view of some details of the construction element of Figure 1;
- Figure 3 shows a perspective view, in partial cross-section, of a second embodiment of a construction element according to the invention;
- Figure 4 shows a perspective view, in partial cross-section, of some details of a third embodiment of a construction element according to the invention.

### Modes for Carrying Out the Invention

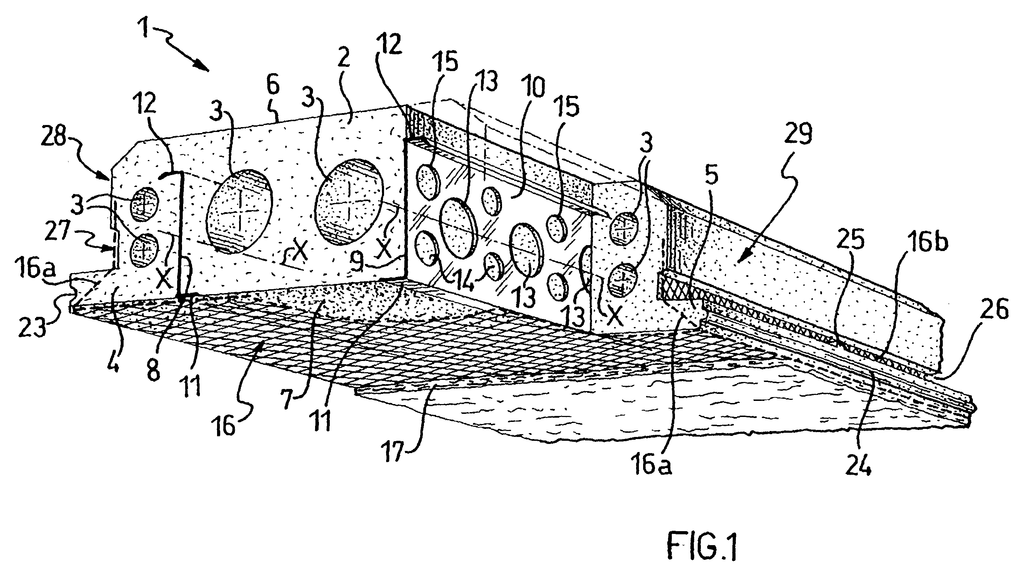

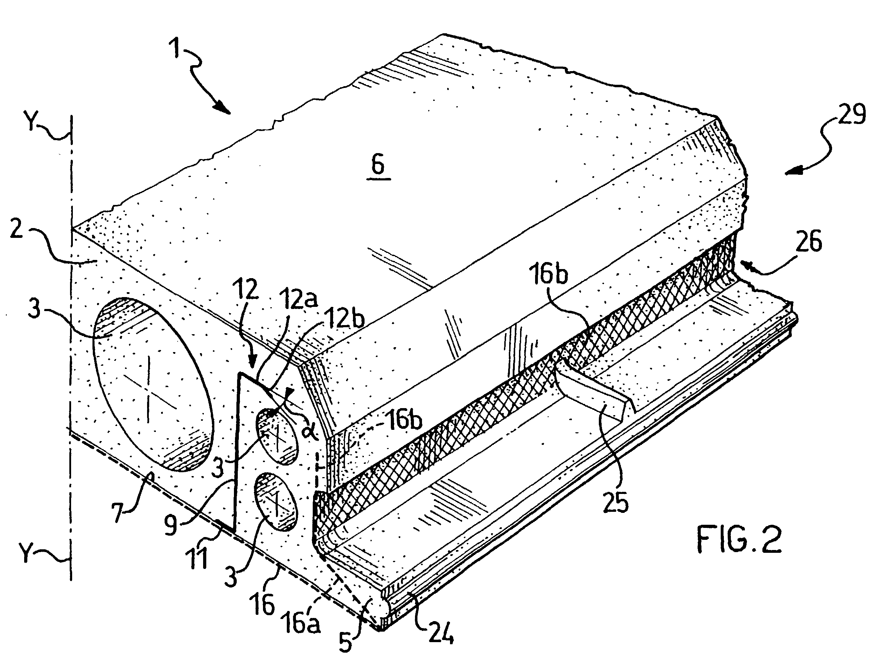

Referring to Figures 1 and 2, generally shown at 1 is a construction element made of expanded plastics, e.g. expanded polystyrene, according to the present invention.

In the example shown, the construction element 1 is a so-called floor element intended for constructing floors, and comprises a central body 2, having a plurality of parallel cavities 3 longitudinally formed therethrough, laterally provided with opposite sides 28 and 29.

The construction element 1 is also provided with a pair of lugs 4, 5 laterally and longitudinally extending along the opposite sides 28 and 29 of the central body 2.

Advantageously, the lugs 4, 5 are laterally provided with a groove 23 and, respectively, with a rib 24 of mating shape, longitudinally extending along the full length of the construction element 1.

Thus, a plurality of construction elements 1 arranged side-by-side may be stably connected together by means of a substantially mating joint.

Advantageously, moreover, the lugs 4, 5 are provided with a plurality of vertical ribs 25, pitchwise arranged along the length of the construction element 1 (Figure 2).

The ribs 25, preferably integral with the lugs 4 and 5, carry out the advantageous function of supporting reinforcing rods placed between adjacent construction elements 1 at a predetermined distance from the remainder of the lugs, whereby the reinforcing rods can be fully embedded within the concrete casting.

The construction element 1 is provided with opposite faces 6, 7 respectively upper and lower, and incorporates two reinforcing section bars 8, 9 of identical construction which are arranged in mirror-image relationship about a longitudinal plane of symmetry y-y of the construction element 1.

The reinforcing section bars 8, 9 are longitudinally extending throughout the central body 2 of the construction element 1 substantially along its entire length, between said upper 6 and lower 7 faces.

Furthermore, the reinforcing section bars 8, 9 are substantially Z-shaped and comprise a central portion 10 and a pair of respectively lower and upper fins 11, 12 extending perpendicularly in opposite directions from the ends of the central portion 10.

In a preferred embodiment, the reinforcing section bars 8, 9 are formed by suitably shaping, by means of conventional equipment, a zinc-galvanized cold-rolled metal sheet having a thickness of about 0.8 mm.

Preferably, furthermore, the central portion 10 of the reinforcing section bars 8, 9 has a height of about 150 mm, while the opposite fins 11, 12 have an overall width of about 15 mm.

In a preferred embodiment, the upper fin 12 is fully embedded in the mass of expanded plastics, and has a first portion 12a, extending substantially perpendicularly to the central portion 10 of the reinforcing section bars 8, 9 and a second end portion 12b which is bent toward the central portion 10.

Preferably, the first portion 12a of the fin 12 has a length of about 15 mm, and the end portion 12b forms an angle (α) of about 45° with the first portion 12a.

Tests carried out by the Applicant have shown that a construction element reinforced with section bars of this shape has self-supporting and compression strength characteristics which are quite comparable with those of a similar construction element reinforced with section bars having a thickness of 1.2 mm and not provided with bent fins 12.

The reinforcing section bars 8, 9 are advantageously provided with a plurality of openings, preferably circular holes obtained by punching, formed through the central portion 10.

These holes serve the dual purpose of lightening the reinforcing section bars 8, 9 and anchoring them more tightly within the mass of expanded plastics.

These holes are arranged in three parallel rows along the central portion 10 of the reinforcing section bars 8 and 9: a first central row of circular holes 13, having a prevailing diameter, arranged pitchwise along a median plane x-x of the section bars, and two side rows of circular holes 14 and 15, having smaller diameter, arranged on opposite parts with respect to the central row.

Preferably, the circular holes 14, 15 in the side rows have parallel axes and are arranged between two consecutive holes 13 of the central row, as shown in Figure 1.

Preferably, the holes 13 have a diameter of about 60 mm, while the holes 14 and 15 have a diameter of about 30 mm, while the pitch spacing of all rows of holes 13-15 is of about 90 mm.

Thus, the holes 13-15 define a perforated area or void area which accounts for about 30% of the overall area of the reinforcing section bars 8 and 9, the term 'overall area' referring to the overall lateral surface area of the section bars (central portion 10 plus fins 11, 12).

In order to further increase the contact surface between the reinforcing section bars 8, 9 and the expanded plastics, the holes 13-15 formed through the central portion 10 may be advantageously provided along their peripheral edge with a protruding lip - not shown - adapted to be fully embedded within the mass of expanded plastics to anchor even more securely therein the reinforcing section bars.

Alternatively, the same advantageous function could be carried out by one or more protrusions - not shown as well - distributed along their peripheral edge and angularly offset from one another.

According to the invention, the construction element 1 further comprises a lath 16 for supporting at least one layer 17 of a suitable covering material, such as plaster, welded to the lower fins 11 of the reinforcing section bars 8, 9.

As can be seen in Figure 1, these fins 11 extend substantially flush with, and substantially parallel to, the lower face 7 of the construction element 1.

Advantageously, the opposite end portions of the lath 16 are bent into a first oblique portion 16a, completely embedded within the lugs 4, 5, and a second portion 16b extending in a substantially vertical direction, partly flush with the opposite lateral sides 28, 29 of the construction element 1.

Advantageously, the complete incorporation of the lath oblique portion 16a within the mass of expanded plastics, avoids the formation of thermal bridges between the lower and upper faces of the lugs 4 and 5 in a floor slab obtained by coupling several construction elements 1 arranged side-by-side.

The vertical portion 16b of the end portion of the lath 16 includes a section which extends flush with the construction element 1 within grooves 26, 27 longitudinally formed lengthwise in the opposite lateral sides 28, 29 of the construction element 1 above the lugs 4 and 5.

Advantageously, this section of the vertical portion 16b allows to stably anchor the lath 16 to the concrete cast into the cavity defined between the sides of adjacent construction elements 1.

Preferably, the lath 16 is a stretched mesh of a zinc galvanized cold-rolled metal sheet, known as "zenzimir" in the trade, which is adapted to receive cement, lime, or gypsum and is corrosion-resistant.

In a preferred embodiment, the lath 16 has a thickness of about 0.5 mm and is formed by a rhomb-shaped mesh having a length-to-height rhomb ratio of 2:1

Preferably, furthermore, the rhomb length is of about 30 mm, while the rhomb height is of about 15 mm.

Advantageously, the construction element 1 described above is able to achieve at the same time both adequate self-supporting characteristics, as conferred thereto by the reinforcing section bars 8, 9 integrated within the mass of expanded plastics, and adequate fire-resisting properties thanks to the presence of the lath 16, firmly held in place by the same reinforcing section bars and, once installed, also by the concrete cast between adjacent construction elements.

The lath 16, in fact, is advantageously able to support the plaster layer 17 even when the mass of expanded plastics is partially or totally shrunk due to the effect of heat.

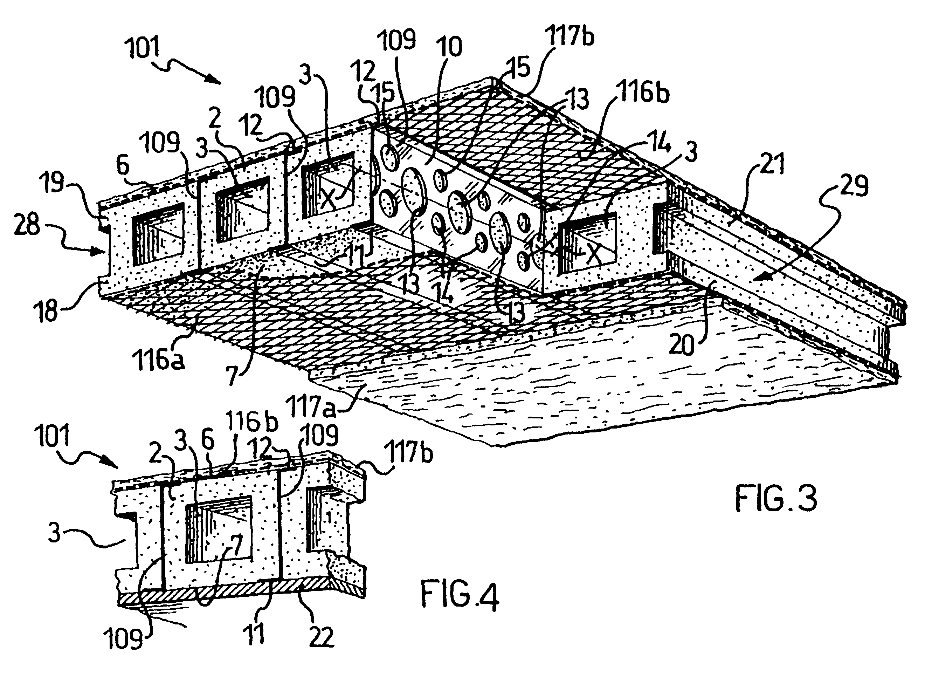

Figures 3 and 4 schematically show further embodiments of the construction element 1 according to the invention.

In the following description and in these Figures, components of the construction element 1 which are structurally or functionally equivalent to those illustrated in connection with the previous embodiment will be indicated by the same reference numerals and will be no further described.

In a second embodiment of the invention, shown in Figure 3, reference 101 indicates a wall element used for instance for erecting bearing and partition walls in a building.

The wall element 101 has in this case two pairs of side lugs, generally denoted by numerals 18-21, extending from the opposite lateral sides 28, 29 of the central body 2.

The wall element 101 includes a plurality of reinforcing section bars 109 transversely extending across the central body 2 of the construction element throughout the whole thickness thereof.

Thus, in this embodiment, both opposite fins 11, 12 of the reinforcing section bars 109, in this case rectilinear side fins, lie substantially flush with and parallel to the opposite faces 6, 7 of the wall element 101.

The latter may then include a pair of laths 116a, 116b, each adapted to support a respective covering layer 117a, 117b, such as plaster, welded to the opposite fins 11, 12 of the reinforcing section bars 109.

According to a third embodiment of the invention, shown in Figure 4, furthermore, the wall element 101 may include a panel 22 of gypsum paperboard, wood, rigid plastics, or another suitable material for decorative and/or structural purposes, instead of the lath 116a, for example.

This panel 22 is fixed to the fins 11 of the reinforcing section bars 109 on the face 7 of the wall element 101 in a manner known per se, such as by a set of screws or dowels, not shown.

According to the nature of the selected covering element, having or not structural capabilities, the wall elements 101 of the invention may advantageously achieve load-bearing characteristics, that is being able to independently withstand possible static loads applied thereto.

Obviously, those skilled in the art may introduce variants and modifications to the above described invention, in order to satisfy specific and contingent requirements, variants and modifications which fall anyhow within the scope of protection as is defined by the following claims.

## Claims

1. A self-supporting construction element (1,101) of expanded plastics, comprising:
a) a central body (2), substantially parallelepipedic in shape, provided with opposite faces (6,7);
b) at least one reinforcing section bar (8,9,109) transversely extending across said central body (2) between said faces (6,7) and embedded in said expanded plastics;
**characterized in that** it further comprises a sheet-like member (16,116) for supporting at least one layer (17) of a suitable covering material, said sheet-like member (16,116) being associated to a fin (11,12) of said reinforcing section bar (8,9,109) lying flush with and substantially parallel to at least one of the faces (6,7) of said construction element (1,101).

2. Construction element (1,101) according to Claim 1, **characterized in that** said reinforcing section bar (8,9,109) transversely extends across said central body (2) through the whole thickness thereof.

3. Construction element (1,101) according to Claim 2, **characterized in that** said reinforcing section bar (8,9,109) comprises a pair of opposite fins (11,12) lying flush with and substantially parallel to the faces (6,7) of said construction element (1,101).

4. Construction element (1,101) according to Claim 3, **characterized in that** it comprises a pair of sheet-like members (116a,116b) for supporting at least one covering layer (117a,117b), said members (116a,116b) being respectively associated to said opposite fins (11,12) of the reinforcing section bar (8,9,109).

5. Construction element (1,101) according to Claim 3, **characterized in that** it further comprises a rigid covering element (22) associated to said reinforcing section bar (8,9,109) at a side opposite with respect to said sheet-like member (116).

6. Construction element (1,101) according to Claim 5, **characterized in that** said rigid covering element (22) is a panel of gypsum paperboard, wood, a rigid plastics, or another suitable material.

7. Construction element (1,101) according to Claim 3, **characterized in that** said reinforcing section bar (8,9,109) is longitudinally extending within said central body (2) along substantially the entire length thereof.

8. Construction element (1,101) according to Claim 1, **characterized in that** said reinforcing section bar (8,9,109) is provided with a plurality of openings (13,14,15) formed in a central portion (10) thereof.

9. Construction element (1,101) according to Claim 8, **characterized in that** the said openings (13,14,15) have a total area comprised between 10% and 60% of the overall surface area of said reinforcing section bar (8,9,109).

10. Construction element (1,101) according to Claim 8, **characterized in that** said openings (13,14,15) have a circular cross-section with a diameter of from 15 to 150 mm.

11. Construction element (1,101) according to Claim 8, **characterized in that** said openings (13,14,15) are peripherally provided with a lip protruding from said central portion (10) and fully embedded in said expanded plastics.

12. Construction element (1,101) according to Claim 8, **characterized in that** said openings (13,14,15) are provided with one or more protrusions being distributed around their peripheral edge and angularly offset from one another, said protrusions being fully embedded in said expanded plastics.

13. Construction element (1,101) according to Claim 1, **characterized in that** said reinforcing section bar (8,9,109) has a thickness of from 0.4 to 1.2 mm.

14. Construction element (1,101) according to Claim 1, **characterized in that** said sheet-like member (16) for supporting at least one covering layer (17) comprises opposite lateral portions (16b) lying at least in part flush with opposite lateral sides (28,29) of said construction element (1,101).

15. Construction element (1,101) according to Claim 1, **characterized in that** said sheet-like member (16,116) for supporting said at least one covering layer (17) is a stretched metallic lath essentially consisting of a rhomb-shaped mesh having a length-to-height rhomb ratio of 2:1.

16. Construction element (1,101) according to Claim 15, **characterized in that** said stretched lath has a thickness of from 0.4 to 1.5 mm.

17. Construction element (1) according to claim 1, **characterized in that** it comprises a plurality of reinforcing section bars (8,9) transversely extending across the central body (2) between said opposite faces (6,7) and embedded in the expanded plastics; **in that** the reinforcing section bars (8,9) are of identical construction and are substantially Z-shaped and are arranged in mirror-image relationship about a longitudinal plane of symmetry (y-y) of the construction element (1) and **in that** the reinforcing section bars (8,9) comprise a central portion (10) and a pair of respectively lower (11) and upper (12) fins extending perpendicularly in opposite directions from the ends of the central portion (10).

18. Construction element (1) according to Claim 17, **characterized in that** said upper fin (12) of the reinforcing section bars (8,9) is fully embedded in the mass of expanded plastics has a first portion (12a), extending substantially perpendicularly to the central portion (10) of the reinforcing section bars (8,9) and a second end portion (12b) which is bent toward said central portion (10).

19. Construction element (1) according to Claim 17, **characterized in that** said upper fin (12) of the reinforcing section bars (8,9) extends from the central portion (10) of the reinforcing section bars (8,9) towards a lateral side (28,29) of the construction element (1).

20. Construction element (1,101) according to anyone of the preceding claims, **characterized in that** it further comprises a layer (17) of plaster, cement, or cement reinforced with fibers of a suitable material, associated to said supporting sheet-like member (16,116).

21. A method of manufacturing a construction element (1,101) according to anyone of claims 1-20, **characterized in that** it comprises the steps of:
- associating a sheet-like member (16,116) for supporting at least one layer (17) of a suitable covering material to a fin (11,12) extending from one end of a reinforcing section bar (8,9,109);
- positioning the thus associated reinforcing section bar (8,9,109) and sheet-like member (16,116) into a molding seat of a suitable apparatus for molding plastics;
- feeding expandable plastics granules into the molding seat;
- expanding and then bonding together the plastics granules in said molding seat so as to embed said reinforcing section bar (8,9,109) into a mass of expanded plastics having a predetermined shape and to maintain said sheet-like member (16,116) at least in part substantially flush with the mass of expanded plastics.

22. A method according to Claim 21, **characterized in that** it comprises an additional step of enucleating at least part of said sheet-like member (16,116) from the mass of expanded plastics.

23. A method according to Claim 22, **characterized in that** said sheet-like member (16,116) is enucleated from the mass of expanded plastics by means of a thermal treatment carried out by feeding onto said mass a sheet of warm air heated at a temperature of from 220° to 260°C.

24. A method according to Claim 23, **characterized in that** said thermal treatment is preceded by a step of scraping a skin layer off said mass of expanded plastics.

25. A method of manufacturing a construction element (1,101) according to anyone of Claims 1-20, **characterized in that** it comprises the steps of:
- positioning a reinforcing section bar (8,9,109), provided with at least one fin (11,12) at one end, into a molding seat of a suitable apparatus for molding plastics;
- feeding expandable plastics granules into the molding seat;
- expanding and then bonding together the plastics granules in said molding seat so as to embed said reinforcing section bar (8,9,109) into a mass of expanded plastics having a predetermined shape and to maintain said at least one fin (11,12) substantially flush with the mass of expanded plastics;
- associating a sheet-like member (16,116) for supporting at least one layer (17) of a suitable covering material to said at least one fin (11,12) of said reinforcing section bar (8,9,109).

26. A method according to Claim 25, **characterized in that** it comprises an additional step of enucleating said at least one fin (11,12) of the reinforcing section bar (8,9,109) from the mass of expanded plastics.

27. A method according to Claim 26, **characterized in that** said at least one fin (11,12) is enucleated from the mass of expanded plastics by means of a thermal treatment carried out by feeding onto said mass a sheet of warm air heated to a temperature of from 220° to 260°C.

28. A method according to Claim 23, **characterized in that** said thermal treatment is preceded by a step of scraping a skin layer off said mass of expanded plastics.

29. A method according to claims 21 or 25, **characterized in that** said sheet-like member (16,116) and said reinforcing section bar (8,9,109) are associated with each other by welding.

30. A floor slab comprising:
- a plurality of self-supporting construction elements (1) of expanded plastics arranged side-by-side, said elements (1) including:
a) a central body (2), substantially parallelepipedic in shape, provided with opposite upper (6) and lower (7) faces and with opposite lateral sides (28,29);
b) at least one reinforcing section bar (8,9) transversely extending across said central body (2) between said opposite upper (6) and lower (7) faces and embedded in said expanded plastics;
c) a sheet-like member (16) for supporting at least one layer (17) of a suitable covering material, said sheet-like member (16) being associated to a fin (11,12) of said reinforcing section bar (8,9) lying flush with and substantially parallel to at least one of said opposite upper (6) and lower (7) faces of the construction element (1) and comprising opposite lateral portions (16b) lying at least in part flush with said opposite lateral sides (28,29) of the construction elements (1);
- a concrete casting housed in a cavity defined between said opposite lateral sides (28,29) of adjacent construction elements (1) of said plurality;
- wherein said lateral portions (16b) of the sheet-like member (16) allow to stably anchor the sheet-like member (16) to said concrete casting.

31. A floor slab according to claim 30, **characterized in that** said construction elements (1) are connected together by means of a substantially mating joint.

32. A floor slab according to claim 31, **characterized in that** said mating joint comprises a groove (23) and a rib (24) of mating shape extending from a pair of lugs (4,5) laterally and longitudinally extending along said opposite lateral sides (28,29) of the construction elements (1) for the full length thereof.

33. A floor slab according to claim 32, **characterized in that** said lateral portions (16b) of the sheet-like member (16) include a section which extends flush with the construction elements (1) within grooves (26,27) longitudinally formed lengthwise in said opposite lateral sides (28,29) of the construction elements 1 above said lugs (4,5).

34. A floor slab according to claim 32, further comprising a plurality of reinforcing rods embedded within said concrete casting.

35. A floor slab according to claim 34, **characterized in that** said lugs (4,5) are provided with a plurality of vertical ribs (25), pitchwise arranged along the length of the construction elements (1), for supporting said reinforcing rods at a predetermined distance from the remainder of the lugs (4,5).

36. A floor slab according to claim 30, **characterized in that** said reinforcing section bar (8,9) transversely extends across said central body (2) through the whole thickness thereof.

37. A floor slab according to claim 30, **characterized in that** said reinforcing section bar (8,9) is longitudinally extending within said central body (2) along substantially the entire length thereof.

38. A floor slab according to claim 30, **characterized in that** said reinforcing section bar (8,9) is provided with a plurality of openings (13,14,15) formed in a central portion (10) thereof.

39. A floor slab according to claim 30, **characterized in that** said sheet-like member (16) for supporting said at least one covering layer (17) is a stretched metallic lath (16) essentially consisting of a rhomb-shaped mesh having a length-to-height rhomb ratio of 2:1.

40. A floor slab according to anyone of claims 30-39, **characterized in that** it further comprises a layer (17) of plaster, cement, or cement reinforced with fibers of a suitable material, associated to said supporting sheet-like member (16).

41. A modular wall element comprising:
- a plurality of self-supporting construction elements (101) of expanded plastics arranged side-by-side, said elements (1) including:
a) a central body (2), substantially parallelepipedic in shape, provided with opposite upper (6) and lower (7) faces, with opposite lateral sides (28,29) and with at least one cavity (3);
b) at least one reinforcing section bar (109) transversely extending across said central body (2) between said opposite upper (6) and lower (7) faces and embedded in said expanded plastics; said at least one reinforcing section bar (119) having a pair of fins (11,12) lying flush with and substantially parallel to said opposite upper (6) and lower (7) faces of the construction element (101);
c) at least one sheet-like member (116a,116b) for supporting at least one layer (117a,117b) of a suitable covering material, said at least one sheet-like member (116a,116b) being associated to at least one of said fins (11,12);
- a concrete casting housed in said at least one cavity (3) of said self-supporting construction elements (101).

42. A modular wall element according to claim 41, comprising a pair of sheet-like members (116a,116b) for supporting respective covering layers (117a,117b), said sheet-like members (116a,116b) being respectively associated to said opposite fins (11,12) of the reinforcing section bar (109).

43. A modular wall element according to claim 41, comprising a sheet-like member (116b) for supporting a respective layer (117b) of a suitable covering material associated to a first one (12) of said fins (11,12) of the reinforcing section bar (109) and a rigid covering element(22) associated to a second one (11) of said fins (11,12) at a side opposite with respect to said sheet-like member (116b).

44. A modular wall element according to claim 43, **characterized in that** said rigid covering element (22) is a panel of gypsum paperboard, wood, a rigid plastics, or another suitable material.

45. A modular wall element according to claim 41, **characterized in that** said reinforcing section bar (109) is longitudinally extending within said central body (2) along substantially the entire length thereof.

46. A modular wall element according to claim 41, **characterized in that** said reinforcing section bar (109) is provided with a plurality of openings (13,14,15) formed in a central portion (10) thereof.

47. A modular wall element according to claim 41, **characterized in that** said at least one sheet-like member (116a,116b) for supporting said at least one covering layer (117a,117b) is a stretched metallic lath essentially consisting of a rhomb-shaped mesh having a length-to-height rhomb ratio of 2:1.

48. A modular wall element according to anyone of claims 41-47, **characterized in that** it further comprises a layer (117a,117b) of plaster, cement, or cement reinforced with fibers of a suitable material, associated to said at least one supporting sheet-like member (116a,116b).

## Patentansprüche

1. Ein selbsttragendes Bauelement (1, 101) aus expandiertem Kunststoff, mit:
a) einem im Wesentlichen quaderförmigen Hauptkörper (2) mit gegenüberliegenden Stirnflächen (6, 7),
b) wenigstens einem verstärkenden Profilstahl (8, 9, 109), der sich zwischen den Stirnflächen (6, 7) quer durch den zentralen Hauptkörper (2) erstreckt und in dem expandierten Kunststoff eingebettet ist,
**dadurch gekennzeichnet, daß** es ferner ein plattenähnliches Bauteil (16, 116) zum Halten wenigstens einer Schicht (17) eines geeigneten Abdeckmaterials umfaßt, wobei das plattenähnliche Bauteil (16, 116) einer Rippe (11, 12) des verstärkenden Profilstahls (8, 9, 109) zugeordnet ist, die bündig mit und im Wesentlichen parallel zu wenigstens einer der Stirnflächen (6,7) des Bauelementes (1, 101) angeordnet ist.

2. Bauelement (1, 101) nach Anspruch 1,
**dadurch gekennzeichnet, daß** sich der verstärkende Profilstahl (8, 9, 109) quer durch den Hauptkörper (2) durch dessen gesamte Dicke erstreckt.

3. Bauelement (1, 101) nach Anspruch 2,
**dadurch gekennzeichnet, daß** der verstärkende Profilstahl (8, 9, 109) ein Paar gegenüberliegender Rippen (11, 12) umfaßt, die bündig mit und im Wesentlichen parallel zu den Stirnflächen (6, 7) des Bauelementes (1, 101) angeordnet sind.

4. Bauelement (1, 101) nach Anspruch 3,
**dadurch gekennzeichnet, daß** es ein Paar plattenähnlicher Bauteile (116a, 116b) zum Halten wenigstens einer Deckschicht (117a, 117b) umfaßt, wobei die Bauteile (116a, 116b) jeweils mit den gegenüberliegenden Rippen (11, 12) des verstärkenden Profilstahles (8, 9, 109) verbunden sind.

5. Bauelement (1, 101) nach Anspruch 3,
**dadurch gekennzeichnet, daß** es ferner ein steifes Abdeckelement (22) umfaßt, das mit dem verstärkenden Profilstahl (8, 9, 109) an einer relativ zu dem plattenähnlichen Bauteil (116) gegenüberliegenden Seite verbunden ist.

6. Bauelement (1, 101) nach Anspruch 5,
**dadurch gekennzeichnet, daß** das steife Abdeckelement (22) ein Paneel aus Gipspappe, Holz, einem steifen Kunststoff oder einem anderen geeigneten Material ist.

7. Bauelement (1, 101)nach Anspruch 3,
**dadurch gekennzeichnet, daß** sich der versteifende Profilstahl (8, 9, 109) in Längsrichtung in dem Hauptkörper (2) über dessen im Wesentlichen gesamte Länge erstreckt.

8. Bauelement (1, 101)nach Anspruch 1,
**dadurch gekennzeichnet, daß** der verstärkende Profilstahl (8, 9, 109) mit einer Mehrzahl von Öffnungen (13, 14, 15) ausgestattet ist, die in einem zentralen Bereich (10) desselben ausgebildet sind.

9. Bauelement (1, 101) nach Anspruch 8,
**dadurch gekennzeichnet, daß** die Öffnungen (13, 14, 15) einen Gesamtbereich aufweisen, der zwischen 10% und 60% des Gesamtoberflächenbereiches des verstärkenden Profilstahles (8, 9, 109) umfaßt.

10. Bauelement (1, 101), nach Anspruch 8,
**dadurch gekennzeichnet, daß** die Öffnungen (13, 14, 15) einen kreisförmigen Querschnitt mit einem Durchmesser von 15 bis 150 mm aufweisen.

11. Bauelement (1, 101) nach Anspruch 8,
**dadurch gekennzeichnet, daß** die Öffnungen (13, 14, 15) peripher mit einer Lippe ausgestattet sind, die von dem zentralen Bereich (10) vorsteht und vollständig in dem expandierten Kunststoff eingebettet ist.

12. Bauelement (1, 101) nach Anspruch 8,
**dadurch gekennzeichnet, daß** die Öffnungen (13, 14, 15) mit einem oder mehreren vorstehenden Bereichen ausgestattet sind, die um deren Umfangsrand verteilt und winkelig gegeneinander versetzt sind, wobei die vorstehenden Bereiche vollständig in dem expandierten Kunststoff eingebettet sind.

13. Bauelement (1, 101) nach Anspruch 1,
**dadurch gekennzeichnet, daß** der verstärkende Profilstahl (8, 9, 109) eine Dicke von 0,4 bis 1,2 mm aufweist.

14. Bauelement (1, 101) nach Anspruch 1,
**dadurch gekennzeichnet, daß** das plattenähnliche Bauteil (16) zum Halten wenigstens einer Abdeckschicht (17) gegenüberliegende laterale Bereiche (16b) umfaßt, die wenigstens teilweise bündig mit gegenüberliegenden lateralen Seiten (28, 29) des Bauelementes (1, 101) angeordnet sind.

15. Bauelement (1, 101) nach Anspruch 1,
**dadurch gekennzeichnet, daß** das plattenähnliche Bauteil (16, 116) zu Halten wenigstens einer Abdeckschicht (17) ein gestreckter, metallischer Maschendraht ist, der im Wesentlichen aus einem rombenförmigen Netz besteht, das ein Rombenverhältnis bezüglich der Länge zur Höhe von 2:1 aufweisen.

16. Bauelement (1, 101) nach Anspruch 15,
**dadurch gekennzeichnet, daß** der gestreckte Maschendraht eine Dicke von 0,4 bis 1,5 mm aufweist.

17. Bauelement (1, 101) nach Anspruch 1,
**dadurch gekennzeichnet, daß** es eine Mehrzahl verstärkter Profilstähle (8, 9) umfaßt, die sich quer durch den Hauptkörper (2) zwischen den gegenüberliegenden Stirnflächen (6, 7) erstrecken und in dem expandierten Kunststoff eingebettet sind, die verstärkenden Profilstähle (8, 9) im Wesentlichen z-förmig sind und über einer longitudinalen Symmetrieebene (y-y) des Bauelementes (1, 101) spiegelbildlich angeordnet sind, und die verstärkenden Profilstähle (8,9) einen zentralen Bereich (10) und ein Paar entsprechender unterer (11) und oberer (12) Rippen umfassen, die sich von den Enden des zentralen Bereiches (10) in entgegengesetzten Richtungen senkrecht erstrecken.

18. Bauelement (1, 101) nach Anspruch 17,
**dadurch gekennzeichnet, daß** die obere Rippe (12) der verstärkenden Profilstähle (8, 9) einen ersten Bereich, (12a), der sich im Wesentlichen senkrecht zu dem zentralen Bereich (10) der verstärkenden Profilstähle (8, 9) erstreckt, und einen zweiten Endbereich (12b) aufweist, der zu dem zentralen Bereich (10) gebogen ist.

19. Bauelement (1, 101) nach Anspruch 17,
**dadurch gekennzeichnet, daß** sich die obere Rippe (12) der verstärkenden Profilstähle (8, 9) von dem zentralen Bereich (10) der verstärkenden Profilstähle (8,9) zu den lateralen Seiten (28, 29) des Bauelementes (1, 101) erstreckt.

20. Bauelement (1, 101) nach einem der vorhergehenden Ansprüche
**dadurch gekennzeichnet, daß** es ferner eine Schicht (17) aus Gips, Zement oder mit Fasern eines geeigneten Materials verstärktem Zement umfaßt, die mit dem haltenden plattenähnlichen Bauteil (16, 116) verbunden ist.

21. Verfahren zum Herstellen eines Bauelementes (1, 101) nach einem der Ansprüche 1 bis 20,
**dadurch gekennzeichnet, daß** es die Schritte umfaßt:
- Verbinden eines plattenähnlichen Bauteiles (16, 116) zum Halten wenigstens einer Schicht (17) eines geeigneten Abdeckmaterials mit einer Rippe (11, 12), die sich von einem Ende eines verstärkenden Profilstahles erstreckt (8, 9, 109),
- Anordnen des so verbundenen verstärkenden Profilstahles (8, 9, 109) und des plattenähnlichen Bauteiles (16, 116) in einen Formsitz einer geeigneten Vorrichtung zum Formen von Kunststoff,
- Zuführen expandierbarer Kunststoffgranulate in den Formsitz,
- Expandieren und dann Verbinden der Kunststoffgranulate in dem Formssitz, um so den verstärkenden Profilstahl (8, 9, 109) in eine Masse expandierten Kunststoffes mit einer vorbestimmten Form einzubetten und das plattenähnliche Bauteil (16, 116) wenigstens teilweise im Wesentlichen bündig mit der Masse expandierten Kunststoffes zu halten.

22. Verfahren nach Anspruch 21,
**dadurch gekennzeichnet, daß** es einen zusätzlichen Schritt eines Herausschälens wenigstens eines Teils des plattenähnlichen Bauteiles (16, 116) aus der Masse expandiertem Kunststoffes umfaßt.

23. Verfahren nach Anspruch 22,
**dadurch gekennzeichnet, daß** das plattenähnliche Bauteil (16, 116) aus der Masse expandierten Kunststoffes mittels einer Wärmebehandlung herausgeschält wird, die ausgeführt wird, indem eine Schicht eines auf eine Temperatur von 220° bis 260° erwärmten warmen Gases auf die Masse zugeführt wird.

24. Verfahren nach Anspruch 23,
**dadurch gekennzeichnet, daß** der Wärmebehandlung ein Schritt eines Wegkratzens einer Hautschicht der Masse expandierten Kunststoffes vorgelagert wird.

25. Verfahren zum Herstellen eines Bauelementes (1, 101) nach einem der Ansprüche 1 bis 20, **dadurch gekennzeichnet, daß** es die Schritte umfaßt:
- Anordnen eines verstärkenden Profilstahles (8, 9, 109), der an einem Ende mit wenigstens einer Rippe (11, 12) ausgestattet ist, in einen Formsitz einer geeigneten Vorrichtung zum Formen von Kunststoff,
- Zuführen expandierbarer Kunststoffgranulate in den Formsitz,
- Expandieren und dann Verbinden der Kunststoffgranulate in dem Formsitz, um so den verstärkenden Profilstahl (8, 9, 109) in eine Masse expandierten Kunststoffes mit einer vorbestimmten Form einzubetten und die wenigstens eine Rippe (11, 12) im Wesentlichen bündig mit der Masse expandiertem Kunststoffes zu halten,
- Verbinden eines plattenähnlichen Bauteiles (16, 116) zum Halten wenigstens einer Schicht (17) eines geeigneten Abdeckmaterials mit der wenigstens einen Rippe (11, 12) des verstärkenden Profilstahles (8, 9, 109).

26. Verfahren nach Anspruch 25,
**dadurch gekennzeichnet, daß** es einen zusätzlichen Schritt eines Herausschälens der wenigstens einen Rippe (11, 12) des verstärkenden Profilstahles (8, 9, 109) aus der Masse expandierten Kunststoffes umfaßt.

27. Verfahren nach Anspruch 26,
**dadurch gekennzeichnet, daß** das plattenähnliche Bauteil (16, 116) aus der Masse expandierten Kunststoffes mittels einer Wärmebehandlung herausgeschält wird, die ausgeführt wird, indem eine Schicht eines auf eine Temperatur von 220° bis 260° erwärmten warmen Gases auf die Masse geführt wird.

28. Verfahren nach Anspruch 23,
**dadurch gekennzeichnet, daß** der Wärmebehandlung ein Schritt eines Wegkratzens einer Hautschicht der Masse expandierten Kunststoffes vorgelagert wird.

29. Verfahren nach Anspruch 21 oder 25,
**dadurch gekennzeichnet, daß** das plattenähnliche Bauteil (16, 116) und der verstärkende Profilstahl (8, 9, 109) durch Schweißen miteinander verbunden sind.

30. Bodenplatte, mit:
- einer Mehrzahl selbststragender Bauelemente (1) aus expandiertem Kunststoff, die seitlich nebeneinander angeordnet sind, wobei die Teile (1) umfassen:
a) einen im Wesentlichen rombenförmigen Hauptkörper (2) der mit gegenüberliegenden oberen (6) und unteren (7) Stirnflächen und mit gegenüberliegenden lateralen Seiten (28, 29) ausgestattet ist,
b) wenigstens einem verstärkenden Profilstahl (8, 9), der sich zwischen den gegenüberliegenden oberen (6) und unteren (7) Stirnflächen quer durch den Hauptkörper (2) erstreckt und in dem expandierten Kunststoff eingebettet ist,
c) einem plattenähnlichen Bauteil (16) zum Halten wenigstens einer Schicht (17) eines geeigneten Abdeckmaterials, wobei das plattenähnliche Bauteil (16) mit einer Rippe (11, 12) des verstärkenden Profilstahls (8, 9) verbunden ist, bündig mit und im Wesentlichen parallel zu wenigstens einer der gegenüberliegenden oberen (6) und unteren (7) Stirnflächen des Bauelementes (1) angeordnet ist und gegenüberliegende laterale Bereiche (16b) umfaßt, die wenigstens teilweise bündig mit den gegenüberliegenden lateralen Seiten (28, 29) des Bauelementes (1) mit angeordnet sind,
- einem Zementgußteil, das in einem Hohlraum untergebracht ist, der zwischen den gegenüberliegenden lateralen Seiten (28, 29) benachbarter Bauelemente (1) der Mehrzahl definiert ist,
- wobei es die lateralen Bereiche (16b) des plattenähnlichen Bauteiles (16) erlauben, das plattenähnliche Bauteil (16) fest an den Zementgußteil zu verankern.

31. Bodenplatte nach Anspruch 30,
**dadurch gekennzeichnet, daß** die Bauelemente (1) mittels einer im Wesentlichen aufeinander abgestimmten Verbindung miteinander verbunden sind.

32. Bodenplatte nach Anspruch 31,
**dadurch gekennzeichnet, daß** die aufeinander abgestimmte Verbindung eine Nut (23) und eine Rippe (24) aufeinanander abgestimmte Form umfaßt, die sich von einem Paar von Absätzen (4,5) erstrecken, die sich entlang der gegenüberliegenden lateralen Seiten (28, 29) des Bauelementes (1) über dessen gesamte Länge lateral und in Längsrichtung erstrecken.

33. Bodenplatte nach Anspruch 31,
**dadurch gekennzeichnet, daß** die lateralen Bereiche (16b) des plattenähnlichen Bauteiles (16) einen Abschnitt umfassen, der sich bündig mit den Bauelementen (1) in den Nuten (26, 27) erstreckt, die longitudinal der Länge nach in den gegenüberliegenden lateralen Seiten (28, 29) des Bauelementes (1) über den Absätzen (4, 5) ausgebildet sind.

34. Bodenplatte nach Anspruch 32, ferner mit einer Mehrzahl verstärkender Stäbe, die in dem Zementgußteil eingebettet sind.

35. Bodenplatte nach Anspruch 34,
**dadurch gekennzeichnet, daß** die Absätze (4, 5) mit einer Mehrzahl vertikaler Rippen (25) ausgestattet sind, die teilungsartig über die Länge des Bauelementes (1) angeordnet sind, um die verstärkenden Stäbe in einem vorbestimmten Abstand von den übrigen Absätzen (4, 5) zu halten.

36. Bodenplatte nach Anspruch 30,
**dadurch gekennzeichnet, daß** sich der verstärkende Profilstahl (8, 9) quer durch den Hauptkörper (2) durch dessen gesamte Dicke erstreckt.

37. Bodenplatte nach Anspruch 30,
**dadurch gekennzeichnet, daß** sich der verstärkende Profilstahl (8, 9) in Längsrichtung in dem Hauptkörper (2) über dessen im Wesentlichen gesamte Länge erstreckt.

38. Bodenplatte nach Anspruch 30,
**dadurch gekennzeichnet, daß** der verstärkende Profilstahl (8, 9) mit einer Mehrzahl von Öffnungen (13, 14, 15) ausgestattet ist, die in einem zentralen Bereich (10) desselben ausgebildet sind.

39. Bodenplatte nach Anspruch 30,
**dadurch gekennzeichnet, daß** das plattenähnliche Bauteil (16) zum Halten wenigstens einer Abdeckschicht (17) ein gestreckter metallischer Maschendraht (16) ist, der im Wesentlichen aus einem rombenförmigen Netz besteht, das ein Rombenverhältnis bezüglich der Länge zur Höhe von 2:1 aufweist.

40. Bodenplatte nach einem der Ansprüche 30 bis 39,
**dadurch gekennzeichnet, daß** sie ferner eine Schicht (17) aus Gips, Zement oder mit Fasern eines geeigneten Materials verstärktem Zement umfaßt, die mit dem haltenden plattenähnlichen Bauteil (16) verbunden ist.

41. Modulares Wandelement, mit:
- einer Mehrzahl selbststragender Bauelemente (101) aus expandiertem Kunststoff, die seitlich nebeneinander angeordnet sind, wobei die Teile (1) umfassen:
a) einen im Wesentlichen quaderförmigen Hauptkörper (2) der mit gegenüberliegenden oberen (6) und unteren (7) Stirnflächen, mit gegenüberliegenden lateralen Seiten (28, 29) und wenigstens einem Hohlraum (3) ausgestattet ist,
b) wenigstens einen verstärkenden Profilstahl (109), der sich zwischen den gegenüberliegenden oberen (6) und unteren (7) Stirnflächen quer durch den Hauptkörper (2) erstreckt und in dem expandierten Kunststoff eingebettet ist, wobei der wenigstens eine verstärkende Profilstahl (119) ein Paar Rippen (11, 12) aufweist, die bündig mit und im wesentlichen parallel zu den gegenüberliegenden oberen (6) und unteren (7) Stirnflächen des Bauelementes (101) angeordnet sind,
c) wenigstens einem plattenbähnlichen Bauteil (116a, 116b) zum Halten wenigstens einer Schicht (117a, 117b) eines geeigneten Abdeckmaterials, wobei das wenigstens eine plattenähnliche Bauteil (116a, 116b ) mit wenigstens einer der Rippen (11,12) verbunden ist,
- einem Zementgußteil, das in dem wenigstens einen Hohlraum (3) der selbststragenden Bauelemente (101) untergebracht ist.

42. Modulares Wandelement nach Anspruch 41, mit einem Paar plattenähnlicher Bauteile (116a, 116b) zum Halten entsprechender Abdeckschichten (117a, 117b), wobei die plattenähnlichen Bauteile (116a, 116b) jeweils mit den gegenüberliegenden Rippen (11, 12) des verstärkenden Profilstahles (109) verbunden sind.

43. Modulares Wandelement nach Anspruch 41, mit einem plattenähnlichen Bauteil (116b) zum Halten einer entsprechenden Schicht (117b) eines geeigneten Abdeckmaterials, das mit einer ersten (12) der Rippen (11, 12) des verstärkenden Profilstahls (109) verbunden ist, und einem steifen Abdeckelement (22), daß mit einer Zweiten (11) der Rippen (11, 12) relativ zu dem plattenähnlichen Bauteil (116b) relativ an einer relativ gegenüberliegenden Seite verbunden ist.

44. Modulares Wandelement nach Anspruch 43,
**dadurch gekennzeichnet, daß** das steife Abdeckelement (22) ein Paneel aus Gipspappe, Holz, einem steifen Kunststoff oder einem anderem geeigneten Material ist.

45. Modulares Wandelement nach Anspruch 43,
**dadurch gekennzeichnet, daß** sich der verstärkende Profilstahl (109) in dem Hauptkörper (2) in Längsrichtung über dessen im Wesentlichen gesamte Länge erstreckt.

46. Modulares Wandelement nach Anspruch 41,
**dadurch gekennzeichnet, daß** der verstärkende Profilstahl (109) mit einer Mehrzahl von Öffnungen (13, 14, 15) ausgestattet ist, die in einem zentralen Bereich (10) desselben ausgebildet sind.

47. Modulares Wandelement nach Anspruch 41,
**dadurch gekennzeichnet, daß** das wenigstens eine plattenähnliche Bauteil (116a, 116b) zum Halten der wenigstens einen Abdeckschicht (117a, 117b) ein gestreckter metallischer Maschendraht ist, der im Wesentlichen aus einem rombenförmigen Netz besteht, das ein Rombenverhältnis bezüglich der Länge zur Höhe von 2:1 aufweist.

48. Modulares Wandelement nach einem der Ansprüche 41 bis 47,
**dadurch gekennzeichnet, daß** es ferner eine Schicht (117a 117b) aus Gips, Zement oder mit Fasern eines geeigneten Materials verstärktem Zement umfaßt, die mit dem wenigstens einen haltenden plattenähnlichen Bauteil (116a, 116b) verbunden ist.

## Revendications

1. Elément de construction autoporteur en plastique expansé, comprenant :
a) un corps central (2), de forme sensiblement parallélépipédique, prévu avec des faces opposées (6, 7) ;
b) au moins un profilé de renforcement en acier (8,9,109) s'étendant transversalement à travers ledit corps central (2) entre lesdites faces (6,7) et noyé dans ledit plastique expansé
**caractérisé en ce qu'**il comprend en outre un élément en feuille (16,116) pour supporter au moins une couche (17) d'un matériau de recouvrement approprié, ledit élément en feuille (16,116) étant associé à une ailette (11,12) dudit profilé de renforcement en acier (8,9,109) se trouvant à fleur avec et sensiblement parallèle à au moins l'une des faces (6,7) dudit élément de construction (1,101).

2. Elément de construction (1,101) selon la revendication 1, **caractérisé en ce que** ledit profilé de renforcement en acier (8,9,109) s'étend transversalement à travers ledit corps central (2) sur toute son épaisseur.

3. Elément de construction (1,101) selon la revendication 2, **caractérisé en ce que** ledit profilé de renforcement en acier (8,9,109) comprend une paire d'ailettes opposées (11,12) se trouvant à fleur avec et sensiblement parallèles aux faces (6,7) dudit élément de construction (1,101).

4. Elément de construction (1,101) selon la revendication 3, **caractérisé en ce qu'**il comprend une paire d'éléments en feuille (116a,116b) pour supporter au moins une couche de recouvrement (117a,117b), lesdits éléments (116a,116b) étant associés respectivement aux dites ailettes opposées (11,12) dudit profilé de renforcement en acier (8,9,109).

5. Elément de construction (1,101) selon la revendication 3, **caractérisé en ce qu'**il comprend en outre un élément de recouvrement rigide (22) associé audit profilé de renforcement en acier (8,9,109) sur le côté opposé par rapport audit élément en feuille (116).

6. Elément de construction (1,101) selon la revendication 5, **caractérisé en ce que** ledit élément de recouvrement rigide (22) est un panneau en carton à base de gypse, en bois, en un plastique rigide ou en un autre matériau approprié.

7. Elément de construction (1,101) selon la revendication 3, **caractérisé en ce que** ledit profilé de renforcement en acier (8,9,109) s'étend longitudinalement dans ledit corps central (2) sensiblement sur toute sa longueur.

8. Elément de construction (1,101) selon la revendication 1, **caractérisé en ce que** ledit profilé de renforcement en acier (8,9,109) est prévu avec une pluralité d'ouvertures (13,14,15) formées dans sa partie centrale (10).

9. Elément de construction (1,101) selon la revendication 8, **caractérisé en ce que** lesdites ouvertures (13,14,15) ont une surface totale comprise entre 10 % et 60 % de la surface totale dudit profilé de renforcement en acier (8,9,109).

10. Elément de construction (1,101) selon la revendication 8, **caractérisé en ce que** lesdites ouvertures (13,14,15) ont une section transversale circulaire avec un diamètre compris entre 15 et 150 mm.

11. Elément de construction (1,101) selon la revendication 8, **caractérisé en ce que** lesdites ouvertures (13,14,15) sont prévues en périphérie avec une lèvre dépassant de ladite partie centrale (10) et complètement noyée dans ledit plastique expansé.

12. Elément de construction (1,101) selon la revendication 8, **caractérisé en ce que** lesdites ouvertures (13,14,15) sont prévues avec une ou plusieurs saillies réparties sur leur bord périphérique et décalées angulairement les unes par rapport aux autres, lesdites saillies étant complètement noyées dans ledit plastique expansé.

13. Elément de construction (1,101) selon la revendication 1, **caractérisé en ce que** ledit profilé de renforcement en acier (8,9,109) a une épaisseur comprise entre 0,4 et 1,2 mm.

14. Elément de construction (1,101) selon la revendication 1, **caractérisé en ce que** ledit élément en feuille (16) destiné à supporter au moins une couche de recouvrement (17) comprend des parties latérales opposées (16b) se trouvant au moins en partie à fleur avec les faces latérales opposées (28,29) dudit élément de construction (1,101).

15. Elément de construction (1,101) selon la revendication 1, **caractérisé en ce que** ledit élément en feuille (16,116) destiné à supporter ladite au moins une couche de recouvrement (17) est un grillage métallique tendu consistant essentiellement en un maillage à mailles en forme de losange, chaque losange ayant un rapport longueur sur hauteur de 2:1.

16. Elément de construction (1,101) selon la revendication 15, **caractérisé en ce que** ledit grillage tendu a une épaisseur comprise entre 0,4 et 1,5 mm.

17. Elément de construction (1) selon la revendication 1, **caractérisé en ce qu'**il comprend une pluralité de profilés de renforcement en acier (8,9) s'étendant transversalement à travers le corps central (2) entre lesdites faces opposées (6,7) et noyés dans le plastique expansé ; **en ce que** les profilés de renforcement en acier (8,9) sont essentiellement en forme de Z et sont arrangés selon une relation d'image en miroir par rapport à un plan longitudinal de symétrie (y-y) de l'élément de construction (1) et **en ce que** les profilés de renforcement en acier (8,9) comprennent une partie centrale (10) et une paire d'ailettes, respectivement inférieure (11) et supérieure (12), s'étendant perpendiculairement dans des directions opposées à partir des extrémités de la partie centrale (10).

18. Elément de construction (1) selon la revendication 17, **caractérisé en ce que** ladite ailette supérieure (12) des profilés de renforcement en acier (8,9) présente une première partie (12a), s'étendant essentiellement perpendiculairement à la partie centrale (10) desdits profilés de renforcement en acier (8,9) et une seconde partie d'extrémité (12b) qui est pliée vers ladite partie centrale (10).

19. Elément de construction (1) selon la revendication 17, **caractérisé en ce que** ladite ailette supérieure (12) desdits profilés de renforcement en acier (8,9) s'étend à partir de la partie centrale (10) des profilés de renforcement en acier (8,9) vers une face latérale (28,29) de l'élément de construction (1).

20. Elément de construction (1,101) selon l'une quelconque des revendications précédentes, **caractérisé en ce qu'**il comprend en outre une couche (17) de plâtre, ciment ou ciment renforcé avec des fibres d'un matériau approprié, associé audit élément en feuille de support (16, 116).

21. Procédé de fabrication d'un élément de construction (1,101) selon l'une quelconque des revendications 1 à 20, **caractérisé en ce qu'**il comprend les étapes suivantes :
- associer un élément en feuille (16, 116) destiné à supporter au moins une couche (17) d'un matériau de recouvrement approprié à une ailette (11,12) s'étendant à partir d'une extrémité d'un profilé de renforcement en acier (8, 9, 109) ;
- positionner le profilé de renforcement en acier (8,9,109) et l'élément en feuille (16,116) ainsi associés dans une cavité de moulage d'un appareil approprié pour mouler le plastique ;
- alimenter ladite cavité de moulage en granulés de plastique expansible ;
- réaliser une expansion et par là même une liaison des granulés de plastique dans ladite cavité de moulage afin de noyer ledit profilé de renforcement en acier (8,9,109) dans une masse de plastique expansé présentant une forme prédéterminée et pour maintenir ledit élément en feuille (16,116) au moins en partie sensiblement à fleur avec la masse de plastique expansé.

22. Procédé selon la revendication 21, **caractérisé en ce qu'**il comprend une étape supplémentaire consistant à retirer au moins une partie dudit élément en feuille (16,116) de la masse de plastique expansé.

23. Procédé selon la revendication 22, **caractérisé en ce que** ledit élément en feuille (16,116) est retiré de la masse de plastique expansé au moyen d'un traitement thermique effectué en fournissant à ladite masse une lame d'air chaud chauffé à une température comprise entre 220° et 260°C.

24. Procédé selon la revendication 23, **caractérisé en ce que** ledit traitement thermique est précédé par une étape de raclage de la couche superficielle de ladite masse de plastique expansé.

25. Procédé de fabrication d'un élément de construction (1,101) selon l'une quelconque des revendications 1 à 20, **caractérisé en ce qu'**il comprend les étapes suivantes :
- positionner un profilé de renforcement en acier (8,9,109), muni d'au moins une ailette (11,12), à une extrémité, dans une cavité de moulage d'un appareil approprié pour mouler du plastique ;
- alimenter ladite cavité de moulage avec des granulés de plastique expansible ;
- réaliser une expansion et par là-même une liaison des granulés de plastique dans ladite cavité de moulage afin de noyer ledit profilé de renforcement en acier (8,9,109) dans une masse de plastique expansé présentant une forme prédéterminée et pour maintenir ladite au moins une ailette (11,12) sensiblement à fleur avec la masse de plastique expansé
- associer un élément en feuille (16,116) destiné à supporter au moins une couche (17) d'un matériau de recouvrement approprié à ladite au moins une ailette (11,12) dudit profilé de renforcement en acier (8,9,109).

26. Procédé selon la revendication 25, **caractérisé en ce qu'**il comprend une étape supplémentaire consistant à retirer ladite au moins une ailette (11,12) dudit profilé de renforcement en acier (8,9,109) de lamasse de plastique expansé.

27. Procédé selon la revendication 26, **caractérisé en ce que** ladite au moins une ailette (11,12) est retirée de la masse de plastique expansé au moyen d'un traitement thermique effectué en fournissant à ladite masse une lame d'air chaud chauffé à une température comprise entre 220° et 260°C.

28. Procédé selon la revendication 23, **caractérisé en ce que** ledit traitement thermique est précédé par une étape de raclage de la couche superficielle de ladite masse de plastique expansé.

29. Procédé selon la revendication 21 ou 25,
**caractérisé en ce que** ledit élément en feuille (16,116) et ledit profilé de renforcement en acier (8,9,109) sont associés l'un à l'autre par soudage.

30. Dalle comprenant
- une pluralité d'éléments de construction autoporteurs (1) de plastique expansé placés côte à côte, lesdits éléments (1) comprenant :
a) un corps central (2), de forme sensiblement parallélépipédique, prévu avec des faces supérieure (6) et inférieure (7) opposées et de faces latérales opposées (28,29) ;
b) au moins un profilé de renforcement en acier (8,9) s'étendant transversalement à travers ledit corps central (2) entre lesdites faces supérieure (6) et inférieure (7) opposées et noyé dans ledit plastique expansé ;
c) un élément en feuille (16) pour supporter au moins une couche (17) d'un matériau de recouvrement approprié, ledit élément en feuille (16) étant associé à une ailette (11,12) dudit profilé de renforcement en acier (8,9) se trouvant à fleur avec et sensiblement parallèle à au moins une desdites faces supérieure (6) et inférieure (7) opposées de l'élément de construction (1) et comprenant des parties latérales opposées (16b) se trouvant au moins en partie à fleur avec lesdites faces latérales opposées (28,29) des éléments de construction (1) ;
- un bloc de béton moulé encastré dans une cavité définie entre lesdites faces latérales opposées (28,29) d'éléments de construction adjacents (1) de ladite pluralité ;
- dans lequel lesdites parties latérales (16b) de l'élément en feuille (16) permettent d'ancrer de façon stable l'élément en feuille (16) audit bloc de béton moulé.

31. Dalle selon la revendication 30, **caractérisé en ce que** lesdits éléments de contruction (1) sont connectés ensemble au moyen d'un joint les raccordant sensiblement.

32. Dalle selon la revendication 31, **caractérisé en ce que** ledit joint de raccordement comprend une rainure (23) et une nervure (24) de formes conjuguées s'étendant à partir d'une paire d'ailes (4,5) s'étendant latéralement et longitudinalement le long desdites faces latérales opposées (28,29) des éléments de construction (1) sur toute leur longueur.

33. Dalle selon la revendication 32, **caractérisé en ce que** lesdites parties latérales (16b) de l'élément en feuille (16) comprennent une section qui s'étend à fleur avec les éléments de construction (1) à l'intérieur des rainures (26,27) formée longitudinalement en longueur dans lesdites faces latérales opposées (28,29) des éléments de construction (1) au-dessus desdites ailes (4,5).

34. Dalle selon la revendication 32, comprenant en outre une pluralité de barres de renforcement noyées dans ledit bloc de béton moulé.

35. Dalle selon la revendication 34, **caractérisé en ce que** lesdites ailes (4,5) sont munies d'une pluralité de nervures verticales (25), arrangées à pas réguliers le long des éléments de construction (1) pour supporter lesdites barres de renforcement à une distance prédéterminée du restant des ailes (4,5).

36. Dalle selon la revendication 30, **caractérisé en ce que** ledit profilé de renforcement en acier (8,9) s'étend transversalement à travers ledit corps central (2) sur toute son épaisseur.

37. Dalle selon la revendication 30, **caractérisé en ce que** ledit profilé de renforcement en acier (8,9) s'étend longitudinalement dans ledit corps central (2) sensiblement sur toute sa longueur.

38. Dalle selon la revendication 30, **caractérisé en ce que** ledit profilé de renforcement en acier (8,9) est muni d'une pluralité d'ouvertures (13,14,15) formées dans sa partie centrale (10).

39. Dalle selon la revendication 30, **caractérisé en ce que** ledit élément en feuille (16) destiné à supporter ladite au moins une couche de recouvrement (17) est un grillage métallique tendu (16) consistant essentiellement en un maillage à mailles en forme de losange, chaque maille ayant un rapport longueur sur hauteur de 2:1.

40. Dalle selon l'une quelconque des revendications 30 à 39, **caractérisé en ce qu'**il comprend en outre une couche (17) de plâtre, ciment ou ciment renforcé avec des fibres d'un matériau approprié, associé audit élément en feuille de support (16).

41. Elément de mur modulaire comprenant :
- une pluralité d'éléments de construction autoporteurs (101) de plastique expansé arrangés côte à côte, lesdits éléments (1) comprenant :
a) un corps central (2), de forme sensiblement parallélépipédique, prévu avec des faces supérieure (6) et inférieure (7) opposées, avec des faces latérales opposées (28, 29) et au moins une cavité (3) ;
b) au moins un profilé de renforcement en acier (109) s'étendant transversalement à travers ledit corps central (2) entre lesdites faces supérieure (6) et inférieure (7) opposées et noyé dans ledit plastique expansé ; ledit au moins un profilé de renforcement en acier (119) ayant une paire d'ailettes (11,12) se trouvant à fleur avec et sensiblement parallèles aux dites faces supérieure (6) et inférieure (7) opposées de l'élément de construction (101) ;
c) au moins un élément en feuille (116a,116b) pour supporter au moins une couche (117a,117b) d'un matériau de recouvrement approprié, ledit au moins un élément en feuille (116a,116b) étant associé à au moins l'une desdites ailettes (11,12) ;
- un bloc de béton moulé encastré dans ladite au moins une cavité (3) desdits éléments de construction autoporteurs (101).

42. Elément de mur modulaire selon la revendication 41, comprenant une paire d'éléments en feuille (116a, 16b) pour supporter des couches de recouvrement respectives (117a,117b), lesdits éléments en feuille (116a,116b) étant associés respectivement aux dites ailettes opposées (11,12) dudit profilé de renforcement en acier (109).

43. Elément de mur modulaire selon la revendication 41, comprenant un élément en feuille (116b) destiné à supporter une couche respective (117b) d'un matériau de recouvrement approprié associé à une première (12) desdites ailettes (11,12) du profilé de renforcement en acier (109) et un élément de recouvrement rigide (22) associé à une seconde (11) desdites ailettes (11,12) sur un côté opposé par rapport audit élément en feuille (116b).

44. Elément de mur modulaire selon la revendication 43, **caractérisé en ce que** ledit élément de recouvrement rigide (22) est un panneau en carton à base de gypse, en bois, en un plastique rigide, ou en un autre matériau approprié.

45. Elément de mur modulaire selon la revendication 41, **caractérisé en ce que** ledit profilé de renforcement en acier (109) s'étend longitudinalement dans ledit corps central (2) sensiblement sur toute sa longueur.

46. Elément de mur modulaire selon la revendication 41, **caractérisé en ce que** ledit profilé de renforcement en acier (109) est muni d'une pluralité d'ouvertures (13,14,15) formées dans sa partie centrale (10).

47. Elément de mur modulaire selon la revendication 41, **caractérisé en ce que** ledit au moins un élément en feuille (116a,116b) destiné à supporter ladite au moins une couche de recouvrement (117a,117b) est un grillage métallique tendu consistant essentiellement en un maillage à mailles en forme de losange, chaque maille ayant un rapport longueur sur hauteur de 2:1.

48. Elément de mur modulaire selon l'une quelconque des revendications 41 à 47, **caractérisé en ce qu'**il comprend en outre une couche (117a,117b) de plâtre, ciment, ou ciment renforcé avec des fibres d'un matériau approprié, associé au dit au moins un élément en feuille de support (116a,116b).
